# EUROPÄISCHE PATENTSCHRIFT

(11) **EP 0 326 060 B1**
(45) Veröffentlichungstag und Bekanntmachung des Hinweises auf die Patenterteilung: **10.11.1993**
(21) Anmeldenummer: 89101121.5
(22) Anmeldetag: 23.01.1989
(51) Int. Cl.: B32B 17/10, C03C 27/12, E05F 15/20, G07C 9/00

(54) **Verwendung einer Verbundglasscheibe mit grossflächiger Drahtspule**
Use of a laminated glass with a large-area coil
Application d'un verre feuilleté avec une couronne de fil de grande étendue .

(30) Priorität: 25.01.1988 DE 8800823 U
(43) Veröffentlichungstag der Anmeldung: 02.08.1989
(73) Patentinhaber: VEGLA Vereinigte Glaswerke GmbH, D-52066 Aachen (DE)
(72) Erfinder: Vornholt, Hans, NL-6471 XL Eygelshoven (NL); Thoren, Dieter, D-5100 Aachen (DE)
(74) Vertreter: Biermann, Wilhelm, Dr.-Ing.

(56) Entgegenhaltungen:
- DE-A- 2 618 869
- FR-A- 2 389 568
- FR-A- 2 574 466

## Beschreibung

Die Erfindung betrifft die Verwendung einer aus wenigstens zwei über eine thermoplastische Klebeschicht miteinander verbundenen Einzelglasscheiben bestehenden und einen elektrischen Leiter aufweisenden Verbundglasscheibe in einer automatisch öffenbaren Tür mit einem Zugangskontrollsystem.

Aus dem Dokument FR-A-2574466 ist eine aus vorgespanntem Glas bestehende Tür mit einem Leiternetz aus einem Leitemail bekannt, bei der das Leiternetz die Funktion eines Alarmgebers im Fall der Zerstörung der Glasscheibe hat. Außerdem ist diese bekannte Türanlage mit einem Zugangskontrollsystem versehen, das eine an einem Beschlagteil der Tür angebrachte Lesevorichtung für ein Badge aufweist, wobei diese Lesevorrichtung nach dem Ultraschall- oder Infrarotstrahlen-Prinzip arbeitet.

Bekannt sind auch Verbundglasscheiben mit einem eingebetteten elektrisch leitenden Draht. Bei einer bekannten Ausführung dient der Draht als Heizwiderstand. In diesem Fall ist der Widerstandsdraht in gleichmäßiger Verteilung auf der zu beheizenden Fläche entweder mäanderförmig oder in Form von parallel zueinander angeordneten Drähten zwischen zwei Stromverteilungsschienen angeordnet. Bei einer anderen bekannten Verbundglasscheibe ist der Draht ein Teil eines Alarmsystems und dient als Geber für die Auslösung des Alarms im Fall der Zerstörung der Glasscheibe. Auch in diesem Fall ist der Draht in Mäanderform auf der gesamten Fläche der Glasscheibe angeordnet. Ebenfalls bekannt ist die Anordnung eines Drahtes oder einer Drahtkonfiguration innerhalb einer Verbundglasscheibe, bei der der Draht die Funktion einer Empfangs- oder einer Sendeantenne hat.

Der Erfindung liegt die Aufgabe zugrunde, eine automatisch öffenbare Tür aus Glas oder mit einem Glaseinsatz und mit einem Zugangskontrollsystem zu schaffen, bei der das Zugangskontrollsystem keine besonderen Maßnahmen auf Seiten der sich der Tür nähernden Person erfordert. Außerdem soll die Glastür bzw. der Glaseinsatz der Tür einfach aufgebaut sein und keine dem Kontrollsystem zugehörenden mechanischen Teile aufweisen.

Die Erfindung besteht darin, daß eine aus wenigstens zwei über eine thermoplastische Klebeschicht miteinander verbundenen Einzelglasscheiben bestehende Verbundglasscheibe, die in der thermoplastischen Zwischenschicht einen elektrischen Leiter in Form einer großflächigen Spule mit einem äußeren Durchmesser von 15 bis 200 cm aufweist, deren Leiterenden aus der Verbundglasscheibe herausgeführt sind, in einer automatisch öffenbaren Tür verwendet wird, wobei die Spule als Detektionsspule eines elektrischen Zugangskontrollsystems dient.

Bei der Erfindung wird von der stromdurchflossenen Detektionsspule ein elektromagnetisches Feld aufgebaut, dessen Ausbreitung und Intensität von der Größe und der Form der Spule abhängt. Zweckmäßigerweise werden deshalb bei rechteckigen Glaseinsätzen und bei Glastüren geradlinige Spulenabschnitte in der Nähe der Umfangskanten der Scheibenfläche angeordnet. Wenn eine Person mit einem entsprechend codierten Pass sich der die Spule aufweisenden Glasscheibe nähert, gibt die Spule ein entsprechendes Signal, das die elektronische Auswerteschaltung ansteuert.

Weitere Merkmale der Erfindung ergeben sich aus den Unteransprüchen und aus der nachfolgenden Beschreibung von zwei bevorzugten Ausführungsbeispielen anhand der Zeichnungen.

Von den Zeichnungen zeigt
- Fig 1: eine Verbundglasscheibe mit einer großflächigen Drahtspule mit einer Reihe von Windungen in der Ansicht,
- Fig 2: eine vergrößerte Schnittdarstellung im Bereich der Linie II-II der Fig 1,
- Fig. 3: eine Verbundglasscheibe mit einer aus einer einzigen Windung bildenden großflächigen Spule, und
- Fig. 4: eine vergrößerte Schnittdarstellung im Bereich der Linie IV-IV der Fig. 3.

Die dargestellten Verbundglasscheiben 1 bzw. 10 sind jeweils als lichtdurchlässiger Glaseinsatz für eine Durchgangstür vorgesehen. Es kann sich dabei um eine Klar durchsichtige Verbundglasscheibe handeln oder auch um eine Verbundglasscheibe, die infolge einer Strukturierung einer oder mehrerer ihrer Glasoberflächen keine klare Durchsicht gestattet.

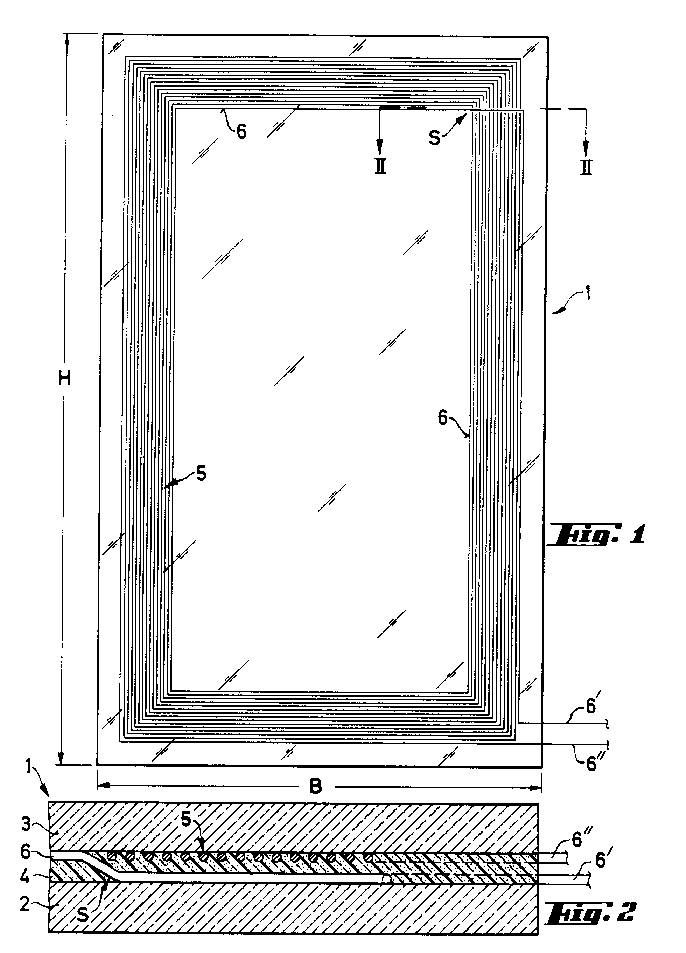

Die in Fig. 1 dargestellte Verbundglasscheibe 1 umfaßt zwei Silikatglasscheiben 2 und 3, die mit Hilfe einer thermoplastischen Klebe- oder Zwischenschicht 4 miteinander verbunden sind. Als Material für die Zwischenschicht dient eine 0,76 mm dicke Folie aus Polyvinylbutyral, doch können stattdessen grundsätzlich auch andere Materialien hierfür verwendet werden. Die Verbundglasscheibe 1 hat eine Höhe H von etwa 1 Meter und eine Breite B von etwa 60 Zentimetern.

Die Drahtspule 5 ist innerhalb der Verbundglasscheibe in der thermoplastischen Schicht 4 angeordnet, wobei die einzelnen Windungen dieser Spule jeweils parallel zu den Umfangskanten der Verbundglasscheibe verlaufen. Die Spule besteht aus einem Draht 6 aus einem gut leitenden Metall wie Silber oder Kupfer mit einem Durchmesser von etwa 0,2 bis 0,4 mm. Die aufeinanderfolgenden Windungen der Spule sind innerhalb einer Ebene nebeneinander angeordnet, wobei der Abstand der einzelnen Windungen voneinander etwa 2 bis 4 mm beträgt. Die Spule 5 weist etwa 15 bis 25 Windungen auf.

Die beiden Enden 6' und 6'' des Drahtes 6 sind zum Anschluß der Spule an die entsprechende elektrische Schaltung an einer Stelle seitlich aus der Verbundglasscheibe herausgeführt. Stattdessen können die Drahtenden aber auch zu Stromanschlußelementen führen, die fest mit der Verbundglasscheibe verbunden sind. Damit der von der innersten Windung kommende Drahtabschnitt beim Überqueren der Spulenwindungen nicht mit diesen Spulenwindungen in Kontakt kommt, ist der Draht an der Stelle S durch die Zwischenschicht 4 hindurchgeführt, so daß er auf der Strecke, auf der er quer zu den Spulenwindungen verläuft, durch die Zwischenschicht 4 gegenüber den Spulenwindungen isoliert ist.

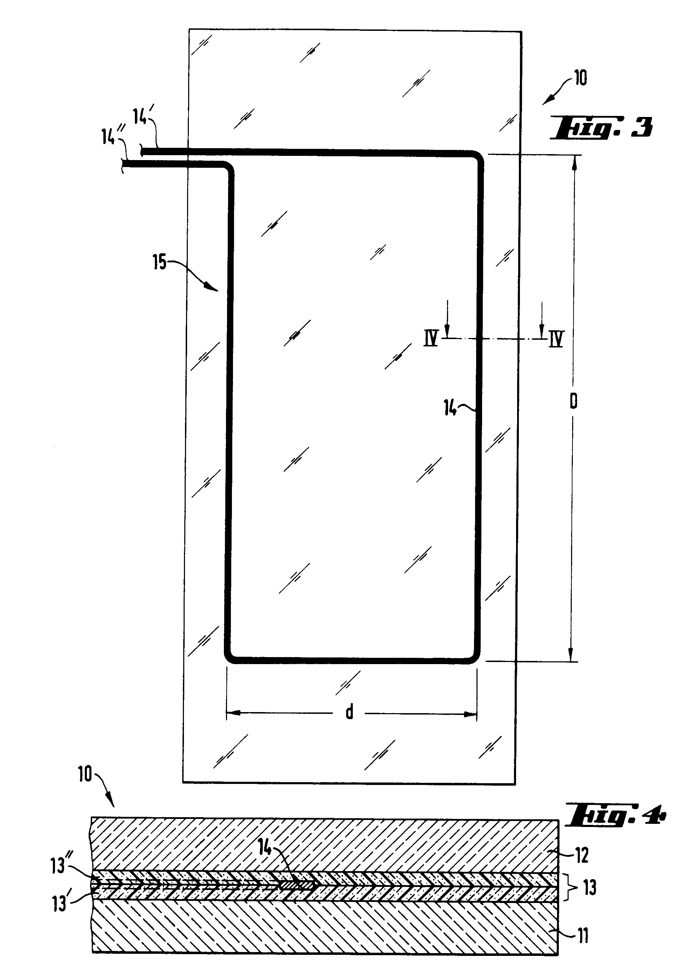

Bei der in den Fig. 3 und 4 dargestellten Ausführungsform besteht die Verbundglasscheibe 10 wiederum aus zwei Silikatglasscheiben 11 und 12 von jeweils 8 mm Dicke, die mit Hilfe einer thermoplastischen Klebe- oder Zwischenschicht 13 miteinander verbunden sind. Die thermoplastische Zwischenschicht 13 besteht aus zwei Polyvinylbutyralfolien 13' und 13'' von je 0,76 mm Dicke. Zwischen diesen beiden Folien 13' und 13''ist der Leiter 14 aus einem Kupferband oder einer Kupferlitze in Form einer aus einer einzigen Windung bestehenden rechteckigen Spule 15 angeordnet. In der einen Richtung beträgt der Durchmesser D der Spule 4 etwa 100 cm, während der Durchmesser d in der anderen Richtung etwa 50 cm beträgt. Der Leiter 14 hat einen Querschnitt von etwa 0,3 mm² bis 0,5 mm². Die beiden Enden 14' und 14'' des Leiters 14 sind seitlich aus der Verbundglasscheibe 10 herausgeführt und auf geeignete Weise an die elektrische Schaltung angeschlossen.

Die Herstellung der beschriebenen Verbundglasscheiben erfolgt in der bekannten Weise, indem vor dem Zusammenlegen der einzelnen Schichten der elektrische Leiter in dem gewünschten Verlauf auf einer Oberfläche einer der die Zwischenschicht bildenden Folien aus thermoplastischem Kunststoff abgelegt und durch Einwirkung von Wärme fixiert wird. Die mit der Spule belegte Folie wird sodann mit den beiden Glasscheiben zusammengelegt und unter Anwendung von Wärme und Druck mit diesen verbunden.

Selbstverständlich kann die in der erfindungsgemäßen Verwendung vorgesehene Verbundglasscheibe erforderlichenfalls auch drei oder mehr Einzelglasscheiben umfassen, wenn sie beispielsweise eine erhöhte Einbruchsicherheit aufweisen soll. Der Aufbau und die Anordnung der Spule werden dadurch jedoch nicht berührt.

Die beschriebenen Verbundglasscheiben werden als Glaseinsatz in einer Tür verwendet, die Teil eines Zugangskontrollsystems ist. Zugangskontrollsysteme werden eingesetzt in Gebäuden, Abteilungen oder Räumen, zu denen aus Geheimhaltungs- oder Sicherheitsgründen nur bestimmte Personen Zugang haben. Wenn diejenigen Personen, denen der Zugang erlaubt ist, mit einem von der Spule erfaßten Sender oder mit einem mit dem von der Detektionsspule aufgebauten elektrischen oder elektromagnetischen Feld reagierenden codierten Paß versehen sind, wird durch die elektrische Schaltung die Steuerung der Tür so ausgeführt, daß die Tür sich bei Annäherung der berechtigten Person automatisch öffnet, während sie im Fall der Annährung von nicht berechtigten Personen geschlossen bleibt. Beispielsweise wird durch die Detektionsspule der codierte Paß automatisch gelesen, und die gelesenen Daten werden mit den im Rechner des Zugangskontrollsystems gespeicherten Daten verglichen. Die Tür wird dann automatisch entriegelt, wenn der jeweilige Paß-Träger die durch die entsprechende Codierung ausgewiesene Zugangsberechtigung hat.

## Patentansprüche

1. Verwendung einer aus wenigstens zwei über eine thermoplastische Klebeschicht miteinander verbundenen Einzelglasscheiben bestehenden Verbundglasscheibe, die in der thermoplastischen Zwischenschicht einen elektrischen Leiter in Form einer großflächigen Spule mit einem äußeren Durchmesser von 15 bis 200 cm aufweist, deren Leiterenden aus der Verbundglasscheibe herausgeführt sind, in einer automatisch öffenbaren Tür, wobei die Spule als Detektionsspule eines elektrischen Zugangskontrollsystems dient.

2. Verwendung einer Verbundglasscheibe nach Anspruch 1, dadurch gekennzeichnet, daß die Windungen der Spule (5; 15) aus geradlinigen Leiterabschnitten bestehen, die parallel zu den Umfangskanten einer rechteckigen Verbundglasscheibe angeordnet sind.

3. Verwendung einer Verbundglasscheibe nach Anspruch 1 oder 2, dadurch gekennzeichnet, daß die Spule (5) bis zu etwa 25 Windungen eines metallischen Drahtes umfaßt, die mit Isolationsabstand in einer Ebene nebeneinander liegen.

4. Verwendung einer Verbundglasscheibe nach Anspruch 3, dadurch gekennzeichnet, daß die Windungen der Spule (5) einen Abstand von 1 bis 3 mm voneinander haben.

5. Verwendung einer Verbundglasscheibe nach Anspruch 3 oder 4, dadurch gekennzeichnet, daß der die Spule (5) bildende Draht (6) einen Durchmesser von 0,2 bis 0,4 mm hat.

6. Verwendung nach Anspruch 1 oder 2, dadurch gekennzeichnet, daß die Spule (15) aus einer Windung eines elektrischen Leiters (14) aus einem flachen Metallband mit einem Leiterquerschnitt von 0,2 bis 1,0 mm² besteht.

7. Verwendung einer Verbundglasscheibe nach einem der Ansprüche 1 bis 6, dadurch gekennzeichnet, daß der die Spule (5; 15) bildende Leiter aus Silber oder aus gegebenenfalls versilbertem oder verzinntem Kupfer besteht.

## Claims

1. Use, in an automatically opening door, of a composite glass pane which consists of at least two individual glass panes connected together by way of a thermoplastic adhesive layer and which has in the thermoplastic intermediate layer an electrical conductor in the form of a large area coil, which has an outer diameter of 15 to 200 centimetres and the conductor ends of which are led out of the composite glass pane, wherein the coil serves as a detection coil of an electrical access control system.

2. Use of a composite glass pane according to claim 1, characterised thereby that the windings of the coil (5; 15) consist of rectilinear conductor portions which are arranged parallel to the peripheral edges of a rectangular composite glass pane.

3. Use of a composite glass pane according to claim 1 or 2, characterised thereby that the coil (5) comprises up to about 25 windings of a metal wire, which lie in one plane with an insulation spacing.

4. Use of a composite glass pane according to claim 3, characterised thereby that the windings of the coil have a spacing of 1 to 3 millimetres from one another.

5. Use of a composite glass pane according to claim 3 or 4, characterised thereby that the wire (6) forming the coil (5) has a diameter of 0.2 to 0.4 millimetres.

6. Use according to claim 1 or 2, characterised thereby that the coil (15) consists of a winding of an electrical conductor (14) of a flat metal tape with a conductor cross-section of 0.2 to 1.0 square millimetres.

7. Use of a composite glass pane according to one of claims 1 to 6, characterised thereby that the conductor forming the coil (5; 15) consists of silver or optionally of silver-plated or tin-plated copper.

## Revendications

1. Utilisation d'un vitrage en verre feuilleté constitué d'au moins deux feuilles de verre individuelles reliées l'une à l'autre au moyen d'une couche d'adhésif thermoplastique, qui comporte, dans la couche intermédiaire thermoplastique, un conducteur électrique sous la forme d'une couronne de grande étendue d'un diamètre extérieur de 15 à 200 cm, les extrémités du conducteur étant amenées à l'extérieur du vitrage en verre feuilleté, dans une porte à ouverture automatique, la couronne servant d'enroulement de détection d'un système électrique de contrôle des accès.

2. Utilisation d'un vitrage en verre feuilleté suivant le revendication 1, caractérisée en ce que les spires de la couronne (5; 15) sont constituées de segments de conducteurs rectilignes qui sont disposés parallèlement aux bords périphériques d'un vitrage en verre feuilleté rectangulaire.

3. Utilisation d'un vitrage en verre feuilleté suivant la revendication 1 ou 2, caractérisée en ce que la couronne (5) comprend jusqu'à environ 25 spires de fil métallique qui sont disposées les unes à côté des autres dans un plan et séparées par une distance d'isolement.

4. Utilisation d'un vitrage en verre feuilleté suivant la revendication 3, caractérisée en ce que les spires de la couronne (5) sont espacées mutuellement d'une distance de 1 à 3 mm.

5. Utilisation d'un vitrage en verre feuilleté suivant la revendication 3 ou 4, caractérisée en ce que le fil (6) formant la couronne (5) a un diamètre de 0,2 à 0,4 mm.

6. Utilisation suivant la revendication 1 ou 2, caractérisée en ce que la couronne (15) est faite d'une spire d'un conducteur électrique (14) constitué d'une bande métallique plate présentant une section transversale de conducteur de 0,2 à 1,0 mm².

7. Utilisation d'un vitrage en verre feuilleté suivant l'une quelconque des revendications 1 à 6, caractérisée en ce que le conducteur formant la couronne (5; 15) est en argent ou en cuivre, le cas échéant argenté ou étamé.
